# EUROPEAN PATENT SPECIFICATION

(11) **EP 4 526 184 B1**
(45) Date of publication and mention of the grant of the patent: **08.04.2026**
(21) Application number: 23729505.0
(22) Date of filing: 17.05.2023
(51) Int. Cl.: B62D 25/08, B60K 11/04

(54) **MOTOR VEHICLE FRONT-END**
KRAFTFAHRZEUG-FRONTEND
EXTRÉMITÉ AVANT DE VÉHICULE À MOTEUR

(30) Priority: 18.05.2022 IT 202200010322
(43) Date of publication of application: 26.03.2025
(73) Proprietor: Stellantis Europe S.p.A., 10135 Torino (TO) (IT)
(72) Inventor: FRAPPAMPINA, Marco, 10135 TORINO (IT); CASALE, Danilo, 10135 TORINO (IT)
(74) Representative: Studio Torta S.p.A.
(86) International application number: PCT/IB2023/055058
(87) International publication number: WO 2023/223222

(56) References cited:
- DE-A1- 102004 024 151
- DE-A1- 102016 203 806
- FR-A1- 2 922 823
- KR-A- 20110 000 867

## Description

### Cross-Reference to Related Applications

This patent application claims priority from Italian patent application no. 102022000010322 filed on May 18, 2022.

### Technical Field

The present invention relates to a motor vehicle front-end.

### Background

As is known, motor vehicles include a heat exchanger assembly that includes at least one radiator to lower the temperature of a heat exchange liquid; this assembly is arranged in a front zone of the engine compartment and is supported by a metal frame comprising an upper horizontal cross member, to which a hood couples, in a releasable manner, to close the engine compartment from above.

For a same model of motor vehicle, there is the need to be able to mount the heat exchanger assembly in two different positions, along the longitudinal direction of forward movement of the motor vehicle, according to the type of powertrain to be installed in the engine compartment, for example according to its power and its dimensions.

In particular, a more powerful powertrain tends to be bulkier and hence tends to require the heat exchanger assembly to be positioned farther forward so as to have more space in the engine compartment. On the contrary, a less powerful powertrain tends to be less bulky and hence allows the heat exchanger assembly to be positioned farther back. With a more rearward positioning, the heat exchanger assembly is naturally farther from the front bumper: an arrangement of this type can have advantages with regard to the degree of safety in the case of a frontal impact accident, based on the impact test conducted according to current legislation and, consequently, based on the safety rates that are normally awarded during these tests (for example, these rates can be used by insurance companies to establish the insurance premium of motor vehicles: a higher degree of safety tends to entail a better score and hence a lower insurance premium).

In known solutions, to mount the heat exchanger assembly in two different longitudinal positions it is necessary to design and produce the support structures provided at the front-end of the motor vehicle in a specific and dedicated manner. In other words, it is necessary to design and produce a structure to support the heat exchanger assembly farther forward and another structure to support the heat exchanger assembly farther back. However, solutions of this type have a relatively high cost, both owing to the fact that a large number of different components must be designed, produced and stored, but above all due to the low level of flexibility along production lines in which the heat exchanger assembly is mounted.

It would therefore be beneficial to design a flexible solution, in relation to the mounting of the heat exchanger assembly, so as to be able to adapt its position in longitudinal direction according to specific needs or requirements, changing the design of the motor vehicle as little as possible and replacing the smallest possible number of components, in order to reduce design and production times and costs.

DE102016203806A1 corresponds to the preamble of claim 1 and discloses a protection mechanism for a cooling module in a motor vehicle, in case of collisions at low collision speeds. The frame supporting the cooling module is coupled to a carriage, which is movable in the longitudinal direction along the longitudinal element that supports the bumper of the motor vehicle.

FR2922823A1 discloses an arrangement for mounting a heat exchanger on a structural element, forming part of a motor vehicle front end. The heat exchanger includes a mechanism attaching it to the structural element, with fingers engaging respective housings in the structural element. A locking mechanism is provided to longitudinally lock the heat exchanger in a vertical position, corresponding to its use position.

KR20110000867A discloses a carrier of a front-end module, to prevent damage by absorbing impacts. The carrier comprises an upper panel, a lower panel and side panels. A mounting module is arranged on one of the upper and lower panels, with an elastic member exerting a longitudinal force to absorb the impacts.

DE102004024151A1 discloses two heat exchangers and a front end panel. The first heat exchanger is mounted to the front end panel by a protrusion engaging a first insertion hole, defined by a U-shaped hole, open on the front side and closed on the rear side. The maximum displacement amount of the first heat exchanger is regulated by the displacement of the second heat exchanger.

### Summary

The object of the present invention is to provide a motor vehicle front-end, which makes it possible to fulfil the requirements set forth above in a simple and inexpensive manner.

According to the present invention, a motor vehicle front-end, as defined in claim 1, and a method for mounting a heat exchanger assembly in a motor vehicle front-end, according to claim 10, are provided. Besides, preferred embodiments form the subject matter of the appended dependent claims.

### Brief Description of the Drawings

The invention will now be described with reference to the accompanying drawings, which illustrate a non-limiting example thereof, wherein:
- Fig. 1 is a perspective front view showing, partially and schematically, a preferred embodiment of the motor vehicle front-end according to the present invention, in a first configuration to install, in particular, a first type of powertrain, not illustrated;
- Fig. 2 is a perspective top view of a detail of Fig. 1, with parts removed for clarity;
- Fig. 3 is a perspective side view showing a detail of Fig. 1, in enlarged scale and with parts removed for clarity;
- Fig. 4 shows the detail of Fig. 3, with an exploded view of parts and from a different point of view; and
- Figs. 5 and 6 are similar to Figs. 3 and 4, respectively, and relate to a second configuration of the front-end according to the present invention, in particular to install a second type of powertrain, not illustrated.

### Description of Preferred Embodiments

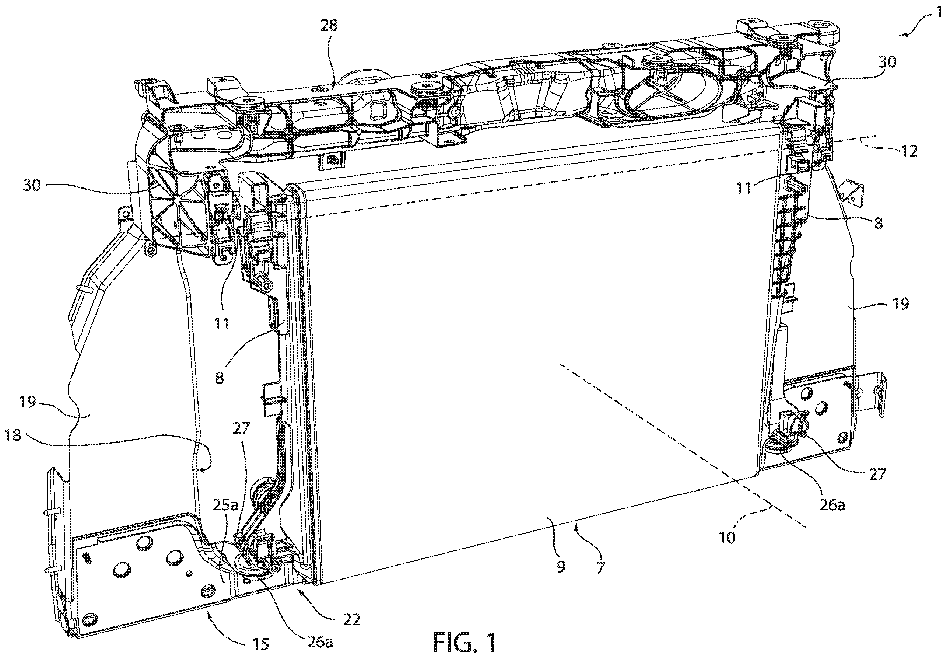

In Fig. 1, the reference number 1 indicates, as a whole, a front-end (partly illustrated) of a motor vehicle. The front-end 1 is arranged in a front zone of an engine compartment of the motor vehicle, behind a bumper (not illustrated) and is configurable during the production steps to adapt to different types of powertrains (not illustrated) to be installed in the engine compartment.

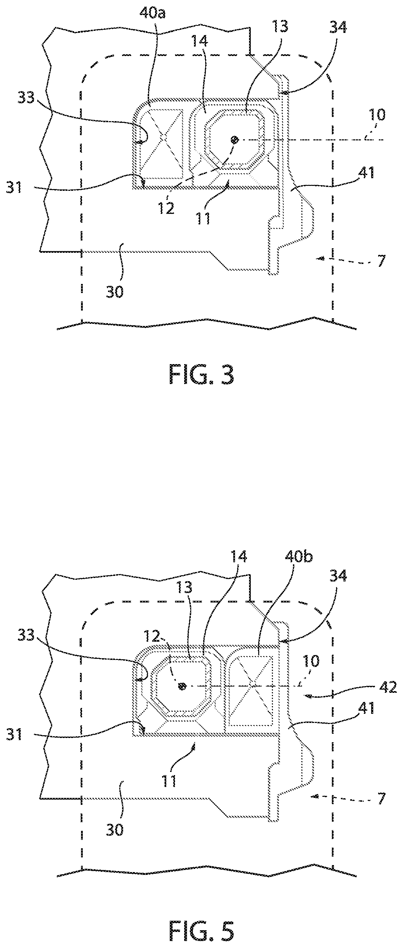

The front-end 1 comprises a heat exchanger assembly 7 (partially illustrated), which comprises, in turn, two side posts 8 and at least one radiator 9 (illustrated schematically), arranged between the posts 8 and oriented orthogonally to an axis 10 that coincides with the axis of forward movement of the motor vehicle. The posts 8 support the radiator 9 in a known manner, not described in detail, and, in turn, are carried by respective attachment appendages 11, laterally outwardly projecting therefrom along a horizontal direction 12. With reference to Figs. 3 and 5, in particular, each attachment appendage 11 comprises a core 13, fixed relative to the corresponding post 8 and preferably made of metal material, and a sleeve 14, which surrounds the core 13 and is made of plastic or elastomeric material.

Again with reference to Fig. 1, the front-end 1 further comprises a support structure defined by a frame 15, supporting the assembly 7 and defining the perimeter of an opening 18 (for example, substantially rectangular in shape) that is coaxial with the axis 10 and at least partially accommodates the assembly 7.

The frame 15 comprises two side posts 19, normally called "vertical links" and, in general, secured to the front ends of two longitudinal struts (not illustrated) of the motor vehicle. In particular, the posts 19 are defined by respective vertical plates, which are aligned longitudinally with the struts and have respective holes (not illustrated) for coupling to these struts.

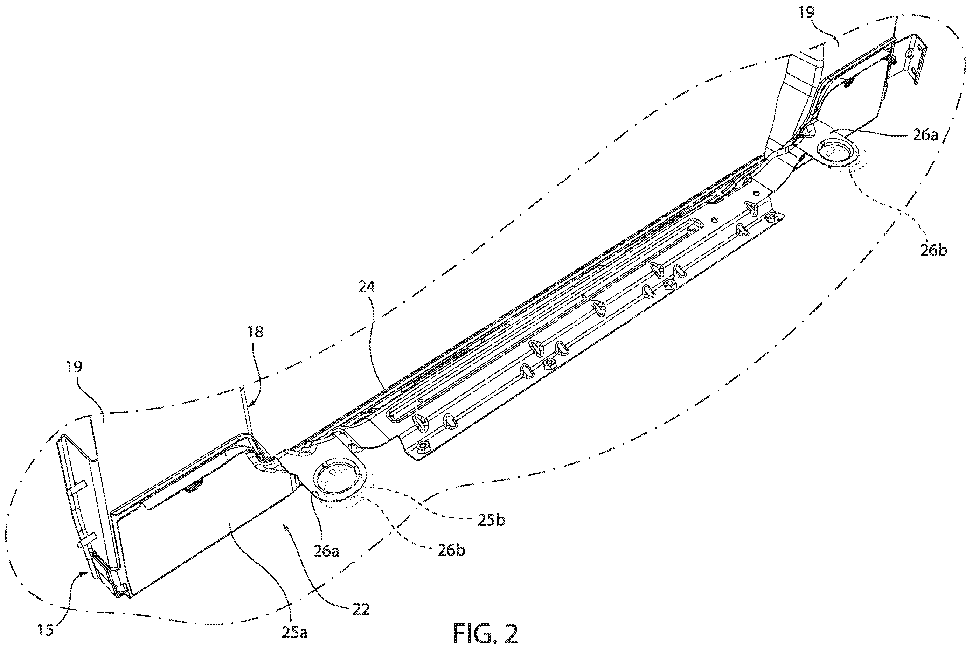

The frame 15 further comprises a lower cross member 22, which supports the lower ends of the posts 8 and, preferably, comprises a rear member 24 (Fig. 2) joined to the lower ends of the posts 19 in a known manner, not described in detail, and supports a front bracket 25a. This latter is arranged in front of the member 24 (considering the axis 10) and comprises two projections 26a that are provided with vertical through holes and are coupled, respectively, to lower ends 27 of the posts 8.

With reference to Fig. 2, according to a preferred aspect of the present invention, the bracket 25a is secured to the member 24 so as to be interchangeable with a different bracket 25b, illustrated partially and with a dashed line, to change the configuration of the front-end 1 in the motor vehicle assembly lines: in detail, the brackets 25a and 25b are arranged selectively (i.e., alternatively to each other) on a front face of the member 24 and are secured thereto by threaded elements, such as screws. Essentially, the bracket 25b differs from the bracket 25a due to the fact that it has projections 26b with holes positioned differently to the projections 26a (so as to be able to arrange and mount the lower ends 27 of the posts 8 farther toward the front or farther toward the rear relative to the frame 15).

Returning to Fig. 1, the frame 15 further comprises an upper cross member 28, which is arranged below a hood of the motor vehicle (not illustrated) and ends laterally with two portions 30 opposite each other, joined to the upper ends of the posts 19 in a known manner, not described in detail.

According to the present invention, the portions 30 respectively support the appendages 11 and are shaped so as to be able to arrange and mount the appendages 11 farther toward the front or farther toward the rear (along the axis 10) relative to the frame 15. In particular, with reference to Figs. 3 to 6, the portions 30 have respective positioning guides 31, which are parallel to the axis 10 and have a sufficiently wide length to be able to arrange the appendages 11 in two different longitudinal positions and thus obtain two different configurations. In detail, these positions are spaced apart longitudinally from each other by a gap, for example of around 25 mm: therefore, the length of the guide 31 is at least equal to the sum of this gap (for example, of 25 mm) and of the longitudinal dimensions of the appendages 11. In particular, the length of the guide 31 refers to a rear shoulder 33, while the front end of the guide 31 has an inlet opening 34 for longitudinally inserting the appendages 11 when the assembly 7 is mounted on the frame 15. More in particular, in side view (Figs. 3 and 5), the portions 30 are C-shaped, so that each guide 31 is defined by a channel having, at the front, the inlet opening 34.

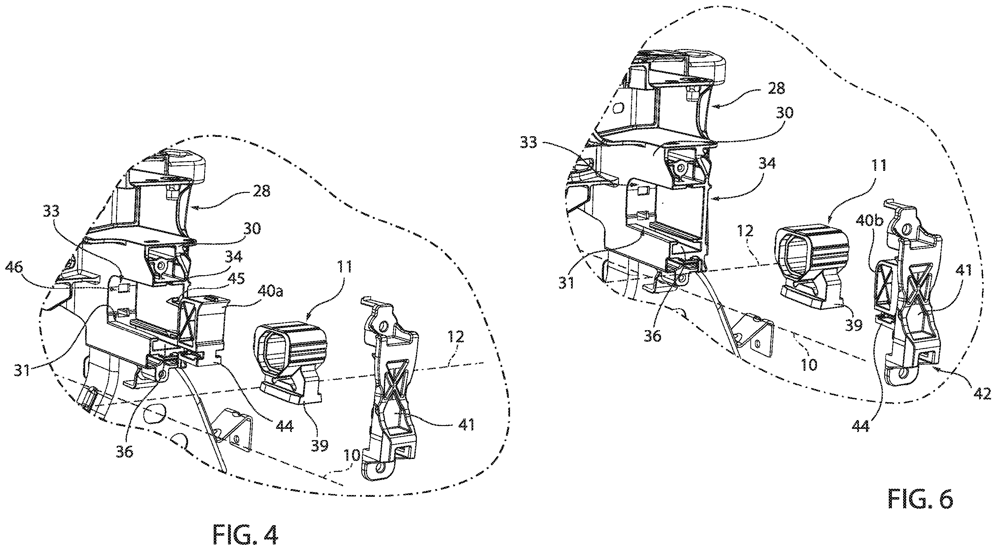

Preferably, with reference to Figs. 4 and 6, each guide 31 has a longitudinal rail 36, engaged by the corresponding appendage 11 so as to retain the latter along the direction 12 and guide it along the axis 10. In particular, the sleeve 14 comprises a slide portion 39 having a cross section with a shape complementary to that of the rail 36, to slide along the latter longitudinally, without being free to move laterally along the direction 12. For example, these cross sections are T-shaped or dovetail shaped. For example, the rail 36 is on a lower wall of the guide 31, but it could also be positioned at the side or above.

In each guide 31, the space that is not engaged by the appendage 11 is filled by a wedge, which is identified by the reference number 40a in the forward configuration of Figs. 3 and 4, and by the reference number 40b in the rearward configuration of Figs. 5 and 6. Preferably, a plug 41 is also provided to close the inlet opening 34: in the preferred example illustrated in Figs. 5 and 6, the plug 41 and the wedge 40b form parts of a single piece, indicated by the reference number 42. In particular, the wedges 40a, 40b and the plug 41 are made of plastic material. In more detail, the plug 41 is secured by threaded elements, for example screws, to the portions 30 of the cross member 28.

Preferably, each wedge 40a and 40b comprises a slide portion 44 slidingly coupled to the rail 36, similar to the slide portion 39 of the appendage 11. In other words, the portion 44 has a cross section with shape complementary to that of the rail 36, so as to be able to slide longitudinally along the axis 10, without being free to move laterally along the direction 12.

In the forward configuration of Figs. 3 and 4, the wedge 40a is longitudinally arranged between the appendage 11 and the shoulder 33, so that it is blocked between these two elements. In turn, the appendage 11 is blocked in a fixed position along the guide 31 (against the wedge 40a) by the plug 41.

As shown in Fig. 4, preferably, each wedge 40a comprises at least one wing 45, which projects longitudinally and engages with snap fastening a corresponding retention seat 46 made in the portion 30, to retain the wedge 40a at least temporarily in a fixed position, before inserting the appendage 11 into the guide 31 during the assembly steps.

As mentioned above, in the assembly lines, the assembly 7 is positioned farther toward the front or farther toward the rear according to the type of the powertrain, for example according to its power and/or its dimensions.

In the case in which the assembly 7 requires to be mounted in a position farther toward the front along the axis 10, the front-end 1 is configured according to Figs. 3 and 4. In particular, the frame 15 is equipped with the bracket 25a, and the guides 31 are engaged by the wedges 40a: in particular, these latter are inserted through the inlet opening 34, and made to slide along the rails 36, until reaching the bottom of the guides 31, against the shoulders 33. At this point, the appendages 11 are inserted into the guides 31 through the inlet openings 34 and, finally, these latter are closed by the plugs 41.

Instead, if the assembly 7 requires to be mounted in a position farther toward the rear, the front-end 1 is configured according to the configuration of Figs. 5 and 6. Therefore, the frame 15 is equipped with the bracket 25b, and the guides 31 are engaged immediately by the appendages 11: these latter are inserted through the inlet openings 34, and made to slide along the rails 36, until reaching the bottom of the guides 31, against the shoulders 33. At this point, the wedges 40b are inserted, i.e., the pieces 42, which are secured to the cross member 28, to fill the empty front space of the guides 31 and close the inlet opening 34.

From the foregoing, it is evident that the front-end 1 has features such as to be able to be configured in order to obtain two different positionings of the assembly 7 along the axis 10, without having to change the structure of the frame 15, but simply making use of the depth of the guides 31 in longitudinal direction in the cross member 28 and, preferably, selecting the bracket 25a or 25b to install on the cross member 22. In particular, the wedges 40a,40b allow the space of the guides 31 that remains empty as a result of the positioning of the appendages 11 to be filled in a relatively easy manner. These wedges 40a,40b, together with the plugs 41, contribute to blocking the appendages 11, and hence the assembly 7, along the guides 31, without having to adopt complex and/or additional securing systems.

In summary, with the exception of the bracket 25a,25b, only one frame 15, which adapts to both positionings of the assembly 7 along the axis 10, requires to be produced and installed. Therefore, the assembly and the configuration of the front-end 1 are very flexible and economical.

Finally, from the above it is evident that modifications and variations can be made to the front-end 1 described and illustrated, without departing from the scope of protection of the present invention, as defined in the appended claims.

In particular, the shape and/or the dimensions and/or the structure of the frame 15 could differ from the illustration provided by way of example.

## Claims

1. A motor vehicle front-end (1) comprising:
- a heat exchanger assembly (7) comprising two side posts (8), at least one radiator supported by said side posts (8), and two attachment appendages (11) outwardly projecting from said side posts (8) along a horizontal direction (12);
- a support structure (15) comprising two side portions (30) which support said appendages (11), respectively;
wherein said side portions (30) comprise respective guides (31) which are engaged by said appendages (11) in a longitudinally sliding manner and have a sufficiently wide length to be able to arrange said appendages (11) in two longitudinal positions, different from each other;
**characterized by** comprising, for each said guide (31), a respective wedge (40a,40b) which engages a space left empty in the guide (31) by the corresponding appendage (11).

2. The motor vehicle front-end according to claim 1, wherein said guides (31) have a rear shoulder (33) and a front inlet opening (34); for each said guide (31), one of said wedge (40a,40b) and said appendage (11) being arranged in abutment against said rear shoulder (33).

3. The motor vehicle front-end according to claim 2, wherein the front inlet opening (34) of each said guide (31) is closed by a plug (41) fixed to said side portion (30).

4. The motor vehicle front-end according to claim 3, wherein said plugs (41) are secured to said side portions (30) by threaded elements.

5. The motor vehicle front-end according to claim 3 or 4, wherein, for each said guide (31):
- said appendage (11) is arranged in abutment against said rear shoulder (33), and
- said wedge (40b) and said plug (41) are parts of a single piece (42).

6. The motor vehicle front-end according to any one of claims 2 to 4, wherein said wedges (40a) are arranged in abutment against said rear shoulder (33) and comprise respective projecting wings (45) engaging respective retention seats (46) made in said side portions (30).

7. The motor vehicle front-end according to any one of the preceding claims, wherein said wedges (40a,40b) are made of plastic material.

8. The motor vehicle front-end according to any one of the preceding claims, wherein said guides (31) have respective rails (36), which are slidingly engaged by slide portions (44) of said wedges (40a,40b) and are shaped so as to retain said wedges (40a,40b) along said horizontal direction (12) and so as to longitudinally guide said wedges (40a,40b).

9. The motor vehicle front-end according to any one of the preceding claims, wherein said support structure (15) further comprises a lower cross member (22), which comprises a rear member (24) and a front bracket (25a,25b) supporting lower ends (27) of said side posts (8) and fixed to said rear member (24) in such a way as to be interchangeable.

10. Method for mounting a heat exchanger assembly (7) in a motor vehicle front-end (1) according to any one of the preceding claims, the method comprising the steps of:
- selecting a longitudinal position of said heat exchanger assembly (7), relative to said support structure (15), between a forward position and a rearward position, according to a powertrain to be installed in the motor vehicle; and
- first, inserting said wedges and, afterwards, inserting said appendages (11) into said guides (31), if the forward position is selected, or
- first, inserting said appendages (11) and, afterwards, inserting said wedges into said guides (31), if the rearward position is selected.

## Patentansprüche

1. Kraftfahrzeug-Vorderende (1), umfassend:
- eine Wärmetauscherbaugruppe (7), umfassend zwei Seitenpfosten (8), mindestens einen von den Seitenpfosten (8) getragenen Kühler und zwei Befestigungsansätze (11), die entlang einer horizontalen Richtung (12) von den Seitenpfosten (8) nach außen vorragen;
- eine Stützstruktur (15), umfassend zwei Seitenabschnitte (30), die jeweils die Ansätze (11) stützen;
wobei die Seitenabschnitte (30) jeweilige Führungen (31) umfassen, die von den Ansätzen (11) auf eine in Längsrichtung gleitende Weise in Eingriff genommen werden und die eine ausreichende Länge aufweisen, um imstande zu sein, die Ansätze (11) in zwei voneinander verschiedenen Längspositionen anzuordnen;
**dadurch gekennzeichnet, dass** sie für jede Führung (31) einen jeweiligen Keil (40a, 40b) umfassen, der in einen Raum eingreift, der in der Führung (31) durch den entsprechenden Ansatz (11) freigelassen wird.

2. Kraftfahrzeug-Vorderende nach Anspruch 1, wobei die Führungen (31) eine hintere Schulter (33) und eine vordere Einlassöffnung (34) aufweisen; wobei für jede Führung (31) eines von dem Keil (40a, 40b) und dem Ansatz (11) in Anlage an der hinteren Schulter (33) angeordnet ist.

3. Kraftfahrzeug-Vorderende nach Anspruch 2, wobei die vordere Einlassöffnung (34) jeder Führung (31) durch einen an dem Seitenabschnitt (30) befestigten Stopfen (41) verschlossen ist.

4. Kraftfahrzeug-Vorderende nach Anspruch 3, wobei die Stopfen (41) durch Gewindeelemente an den Seitenabschnitten (30) gesichert sind.

5. Kraftfahrzeug-Vorderende nach Anspruch 3 oder 4, wobei für jede Führung (31):
- der Ansatz (11) in Anlage an der hinteren Schulter (33) angeordnet ist und
- der Keil (40b) und der Stopfen (41) Teile eines einzigen Stücks (42) sind.

6. Kraftfahrzeug-Vorderende nach einem der Ansprüche 2 bis 4, wobei die Keile (40a) in Anlage an der hinteren Schulter (33) angeordnet sind und jeweilige vorragende Flügel (45) umfassen, die in jeweilige Halteaufnahmen (46) eingreifen, die in den Seitenabschnitten (30) gebildet sind.

7. Kraftfahrzeug-Vorderende nach einem der vorstehenden Ansprüche, wobei die Keile (40a, 40b) aus Kunststoffmaterial hergestellt sind.

8. Kraftfahrzeug-Vorderende nach einem der vorstehenden Ansprüche, wobei die Führungen (31) jeweilige Schienen (36) aufweisen, die von Gleitabschnitten (44) der Keile (40a, 40b) gleitend in Eingriff genommen werden und so geformt sind, dass sie die Keile (40a, 40b) entlang der horizontalen Richtung (12) halten und die Keile (40a, 40b) in Längsrichtung führen.

9. Kraftfahrzeug-Vorderende nach einem der vorstehenden Ansprüche, wobei die Stützstruktur (15) ferner ein unteres Querelement (22) umfasst, das ein hinteres Element (24) und eine vordere Halterung (25a, 25b) umfasst, die die unteren Enden (27) der Seitenpfosten (8) stützt und an dem hinteren Element (24) so befestigt ist, dass sie austauschbar ist.

10. Verfahren zum Montieren einer Wärmetauscherbaugruppe (7) in einem Kraftfahrzeug-Vorderende (1) nach einem der vorstehenden Ansprüche, wobei das Verfahren die folgenden Schritte umfasst:
- Auswählen einer Längsposition der Wärmetauscherbaugruppe (7) relativ zu der Stützstruktur (15) zwischen einer vorderen Position und einer hinteren Position entsprechend einem in das Kraftfahrzeug einzubauenden Antriebsstrang; und
- zuerst Einführen der Keile und anschließend Einführen der Ansätze (11) in die Führungen (31), wenn die vordere Position ausgewählt wird, oder
- zuerst Einführen der Ansätze (11) und anschließend Einführen der Keile in die Führungen (31), wenn die hintere Position ausgewählt wird.

## Revendications

1. Train avant de véhicule à moteur (1) comprenant :
- un ensemble échangeur de chaleur (7) comprenant deux montants latéraux (8), au moins un radiateur supporté par lesdits montants latéraux (8), et deux appendices (11) de fixation faisant saillie vers l'extérieur à partir desdits montants latéraux (8) le long d'une direction horizontale (12) ;
- une structure de support (15) comprenant deux portions latérales (30) qui supportent lesdits appendices (11), respectivement ;
dans lequel lesdites portions latérales (30) comprennent des guides (31) respectifs qui sont mis en prise par lesdits appendices (11) d'une manière coulissante longitudinalement et ont une longueur suffisamment grande pour pouvoir agencer lesdits appendices (11) dans deux positions longitudinales, différentes l'une de l'autre ;
**caractérisé en ce qu'**il comprend, pour chaque dit guide (31), une cale (40a, 40b) respective qui vient en prise dans un espace laissé vide dans le guide (31) par l'appendice (11) correspondant.

2. Train avant de véhicule à moteur selon la revendication 1, dans lequel lesdits guides (31) ont un épaulement arrière (33) et une ouverture d'entrée avant (34) ; pour chaque dit guide (31), un parmi ladite cale (40a, 40b) et ledit appendice (11) étant agencé en butée contre ledit épaulement arrière (33).

3. Train avant de véhicule à moteur selon la revendication 2, dans lequel l'ouverture d'entrée avant (34) de chaque dit guide (31) est fermée par un bouchon (41) fixé à ladite portion latérale (30).

4. Train avant de véhicule à moteur selon la revendication 3, dans lequel lesdits bouchons (41) sont fixés auxdites portions latérales (30) par des éléments filetés.

5. Train avant de véhicule à moteur selon la revendication 3 ou 4, dans lequel, pour chaque dit guide (31) :
- ledit appendice (11) est agencé en butée contre ledit épaulement arrière (33), et
- ladite cale (40b) et ledit bouchon (41) sont des parties d'une seule pièce (42).

6. Train avant de véhicule à moteur selon l'une quelconque des revendications 2 à 4, dans lequel lesdites cales (40a) sont agencées en butée contre ledit épaulement arrière (33) et comprennent des ailettes en saillie (45) respectives venant en prise avec des sièges de retenue (46) respectifs réalisés dans lesdites portions latérales (30).

7. Train avant de véhicule à moteur selon l'une quelconque des revendications précédentes, dans lequel lesdites cales (40a, 40b) sont faites de matière plastique.

8. Train avant de véhicule à moteur selon l'une quelconque des revendications précédentes, dans lequel lesdits guides (31) ont des rails (36) respectifs, qui sont mis en prise de manière coulissante par des portions coulissantes (44) desdites cales (40a, 40b) et sont formés de manière à retenir lesdites cales (40a, 40b) le long de ladite direction horizontale (12) et de manière à guider longitudinalement lesdites cales (40a, 40b).

9. Train avant de véhicule à moteur selon l'une quelconque des revendications précédentes, dans lequel ladite structure de support (15) comprend en outre un organe traverse inférieur (22), qui comprend un organe arrière (24) et un appui avant (25a, 25b) supportant des extrémités inférieures (27) desdits montants latéraux (8) et fixé audit organe arrière (24) de façon à être interchangeable.

10. Méthode de montage d'un ensemble échangeur de chaleur (7) dans un train avant de véhicule à moteur (1) selon l'une quelconque des revendications précédentes, la méthode comprenant les étapes consistant à :
- sélectionner une position longitudinale dudit ensemble échangeur de chaleur (7), par rapport à ladite structure de support (15), entre une position vers l'avant et une position vers l'arrière, selon un groupe motopropulseur devant être installé dans le véhicule à moteur ; et
- tout d'abord, insérer lesdites cales, et, ensuite, insérer lesdits appendices (11) dans lesdits guides (31), si la position vers l'avant est sélectionnée, ou
- tout d'abord, insérer lesdits appendices (11), et, ensuite, insérer lesdites cales dans lesdits guides (31), si la position vers l'arrière est sélectionnée.
